# EUROPEAN PATENT APPLICATION

(11) **EP 4 696 549 A1**
(43) Date of publication of application: **18.02.2026**
(21) Application number: 24787836.6
(22) Date of filing: 05.03.2024
(51) Int. Cl.: B60L 53/80, B60K 1/04

(54) **LOCK ASSEMBLY, BATTERY BRACKET, BATTERY, AND ELECTRIC DEVICE**

(30) Priority: 12.04.2023 CN 202320808171 U
(71) Applicant: Contemporary Amperex Technology Co., Limited, Ningde, Fujian 352100 (CN)
(72) Inventor: WU, Shouyong, Ningde, Fujian 352100 (CN); CAO, Gen, Ningde, Fujian 352100 (CN)
(74) Representative: Lorenz Seidler Gossel Part. mbB
(86) International application number: PCT/CN2024/080070
(87) International publication number: WO 2024/212730

(57) **Abstract**

A lock assembly (100), a battery tray (300), and an electric apparatus (1000) are provided. The lock assembly (100) includes a plurality of lock bodies (10), the lock body (10) including a locking component (11) and a driving member (12), where the locking component (11) is configured to be able to be driven by the driving member (12) to transition from a locked state to an unlocked state. The lock assembly (100) further includes a connecting structure (20), where the connecting structure (20) is connected to driving members (12) of the plurality of lock bodies (10) to link the driving members (12) of the plurality of lock bodies (10), enabling locking components (11) of the plurality of lock bodies (10) to be simultaneously driven by the corresponding driving members (12) to transition from the locked state to the unlocked state.

## Description

### CROSS-REFERENCE TO RELATED APPLICATIONS

This disclosure is based on Chinese Patent Application No. 202320808171.1, filed on April 12, 2023, and claims the priority of this Chinese patent application, which is incorporated herein by reference in its entirety.

### TECHNICAL FIELD

This application relates to the field of batteries, specifically to a lock assembly, a battery tray, a battery, and an electric apparatus.

### BACKGROUND

With the development of new energy vehicles, the demand for convenience in new energy vehicles is increasing. As vehicle battery capacity cannot be significantly improved at present, battery swapping is becoming one of the options to enhance the competitiveness of new energy vehicles. However, the existing battery swapping process is complex, resulting in low battery swapping efficiency, increasing the time required for battery swapping, and affecting user experience.

### SUMMARY

In view of the above issues, this application provides a lock assembly, a battery tray, a battery, and an electric apparatus, capable of addressing issues such as low battery swapping efficiency and lock body damage due to inconsistent unlocking actions of multiple lock bodies.

According to a first aspect, this application provides a lock assembly including: a plurality of lock bodies, the lock body including a locking component and a driving member, where the locking component is configured to be able to be driven by the driving member to transition from a locked state to an unlocked state; and a connecting structure, where the connecting structure is connected to driving members of the plurality of lock bodies to link the driving members of the plurality of lock bodies, enabling locking components of the plurality of lock bodies to be simultaneously driven by the corresponding driving members to transition from the locked state to the unlocked state.

In the technical solution of embodiments of this application, the connecting structure is connected to the driving members of the plurality of lock bodies, enabling linkage of the driving members of the plurality of lock bodies, thereby allowing the locking components of the plurality of lock bodies to simultaneously transition from the locked state to the unlocked state. This enables the plurality of lock bodies to achieve synchronized unlocking, reducing the likelihood of inconsistent unlocking among multiple locks on the same product, improving the consistency of unlocking actions during battery swapping, enhancing battery swapping efficiency, reducing the probability of lock body damage due to uneven force distribution among the plurality of lock bodies, improving the structural reliability of the lock assembly, and increasing the success rate of battery swapping.

In some embodiments, the lock assembly further includes an operating member, where the operating member is connected to at least one of the driving members, the operating member being configured to control the at least one driving member to drive a corresponding locking component to transition from the locked state to the unlocked state; or where the operating member is connected to the connecting structure, the operating member being configured to drive the driving members of the plurality of lock bodies through the connecting structure, enabling the locking components of the plurality of lock bodies to be driven by the corresponding driving members to transition from the locked state to the unlocked state. In this technical solution, by connecting the operating member to the driving member or the connecting structure, the locking components of the plurality of lock bodies can simultaneously transition from the locked state to the unlocked state through the operation of the operating member, enabling synchronized unlocking of the plurality of lock bodies and improving battery swapping efficiency.

In some embodiments, the connecting structure includes a connecting rod, and the driving members of the plurality of lock bodies are all connected to the connecting rod. In this technical solution, the driving members of the plurality of lock bodies are connected through the connecting rod, and the movement of the connecting rod drives the synchronized action of the plurality of driving members, resulting in a simple structure, convenient assembly, and reliable coordination.

In some embodiments, the connecting rod extends along a first direction, and the plurality of lock bodies are arranged at intervals along the first direction. In this technical solution, aligning the extension direction of the connecting rod with the arrangement direction of the plurality of lock bodies facilitates synchronized unlocking of the plurality of lock bodies by the connecting rod, reduces the space occupied by the lock assembly, and improves the rationality of the layout.

In some embodiments, the lock body includes a fixed base, the driving member is configured to be rotatable relative to the fixed base, and the locking component is configured to be able to transition from the locked state to the unlocked state with rotation of the driving member. In this technical solution, the driving member is installed on the fixed base to secure the driving member, and the state of the locking component is changed through the rotation of the driving member, facilitating the installation of the overall structure.

In some embodiments, the driving member includes a rotation center portion and a protruding portion protruding circumferentially from the rotation center portion, the fixed base is provided with a first rotation shaft, the first rotation shaft passes through the rotation center portion, and the connecting structure is rotatably connected to the protruding portion. In this technical solution, configuring the driving member with a rotation center portion and a protruding portion facilitates both the rotational connection between the driving member and the fixed base and the coordination between the driving member and the locking component or the connecting structure, resulting in a simple structure, reduced weight and space occupation of the driving member, lower overall weight of the lock assembly, reduced manufacturing costs, and easier installation and arrangement of the lock assembly.

In some embodiments, a plurality of protruding portions are provided, the connecting structure is rotatably connected to one of the protruding portions, and another of the protruding portions is connected to the operating member. In this technical solution, connecting the operating member to a protruding portion enables the operating member to drive the driving member, thereby transitioning the corresponding locking component to the unlocked state. Connecting the connecting structure to another protruding portion allows the operating member to drive one locking component to unlock while other locking components are synchronously unlocked through the transmission function of the connecting structure, resulting in a simple structure and convenient connection.

In some embodiments, the locking component includes a locking member, the locking member has a locking passage for receiving a lock pin, and the locking member is configured to be rotatable relative to the fixed base, enabling an opening of the locking passage to face different directions when the locking component is in the locked state and when the locking component is in the unlocked state. In this technical solution, providing a rotatable locking member allows the locking passage defined by the locking member to face different directions, enabling the locking component to switch between the locked state and the unlocked state, improving the convenience of the battery swapping process and enhancing battery swapping efficiency.

In some embodiments, the fixed base includes a lock pin entrance, the lock assembly is configured such that when the locking component is in the unlocked state, the opening of the locking passage faces the lock pin entrance; and the lock assembly is further configured such that when the locking component is in the locked state, the opening of the locking passage does not face the lock pin entrance. In this technical solution, aligning the opening of the locking passage with the lock pin entrance facilitates entry of the lock pin into the locking component when the locking component is in the unlocked state, while the lock pin can drive the locking component to transition from the unlocked state to the locked state. At this time, by misaligning the opening of the locking passage with the lock pin entrance, locking of the lock pin is achieved, preventing disengagement of the lock pin, with convenient locking and improved lock swapping efficiency.

In some embodiments, the fixed base is provided with a second rotation shaft, and the second rotation shaft passes through the locking member. In this technical solution, the locking member is installed on the fixed base to secure the locking member. When the locking component switches between the unlocked state and the locked state, the locking member rotates along the second rotation shaft, enabling convenient switching and high reliability, thereby improving battery swapping efficiency and stability.

In some embodiments, the locking component further includes a mating locking member, the locking member is provided with a first locking portion, the mating locking member is provided with a second locking portion, and the mating locking member is configured to engage with the first locking portion through the second locking portion when the locking member is in the locked state. In this technical solution, engagement of the first locking portion and the second locking portion prevents the locking member from rotating toward the unlocked state, enhancing the stability of the locking component in the locked state.

In some embodiments, the driving member is connected to the mating locking member, and the mating locking member is configured to be able to move under driving of the driving member to disengage the second locking portion from the first locking portion. In this technical solution, the driving member drives the mating locking member to move, disengaging the second locking portion from the first locking portion, enabling the locking component to transition to the unlocked state, with convenient and quick unlocking, thereby improving battery swapping efficiency.

In some embodiments, the driving member includes the rotation center portion and the protruding portion protruding circumferentially from the rotation center portion, where the protruding portion is provided in plurality and the mating locking member is connected to at least one of the plurality of protruding portions. In this technical solution, providing multiple protruding portions on the outer periphery of the rotation center portion facilitates coordination between the driving member and the mating locking member, resulting in a simple structure, reduced weight and reduced space occupation of the driving member, lower overall weight of the lock assembly, reduced manufacturing costs, and easier installation and arrangement of the lock assembly.

In some embodiments, the mating locking member is configured to be rotatable relative to the fixed base, and the mating locking member is configured to be able to rotate under driving of the driving member to disengage the second locking portion from the first locking portion. In this technical solution, rotatably mounting the mating locking member on the fixed base secures the mating locking member. Rotation of the mating locking member changes the state of engagement between the mating locking member and the locking member, thereby changing the state of the locking component, with high reliability, good stability, and easy installation of the overall structure.

In some embodiments, the lock body includes a fixed base, the fixed base includes a lock pin entrance, the locking component includes a locking member and a mating locking member, the locking member has a locking passage for receiving a lock pin, where the locking component is configured such that when in the locked state, an opening of the locking passage does not face the lock pin entrance and the mating locking member abuts and engages with the locking member; and the locking component is further configured such that when in the unlocked state, the mating locking member disengages from the locking member, enabling the opening of the locking passage to face the lock pin entrance. In this technical solution, aligning the opening of the locking passage with the lock pin entrance and disengaging the mating locking member from the locking member facilitates entry of the lock pin into the locking component when the locking component is in the unlocked state, while the lock pin can drive the locking component to transition from the unlocked state to the locked state. At this time, by misaligning the opening of the locking passage with the lock pin entrance and engaging the mating locking member with the locking member, locking of the lock pin is achieved, preventing disengagement of the lock pin, with convenient locking and improved lock swapping efficiency.

In some embodiments, the driving member, the locking member, and the mating locking member are each configured to be rotatable relative to the fixed base, the fixed base is provided with a first rotation shaft, a second rotation shaft, and a third rotation shaft, the first rotation shaft passes through the driving member, the second rotation shaft passes through the locking member, the third rotation shaft passes through the mating locking member, and the first rotation shaft, the second rotation shaft, and the third rotation shaft are not arranged in a same plane. In this technical solution, not arranging the three rotation shafts in the same plane reduces the overall size of the lock body, thereby reducing the overall size of the lock assembly, facilitating the installation and arrangement of the lock assembly.

According to a second aspect, this application provides a battery tray including the lock assembly described in the embodiments of the first aspect. In this technical solution, the plurality of lock bodies can achieve synchronized unlocking, reducing the likelihood of inconsistent unlocking among multiple locks on the same product, improving the consistency of unlocking actions during battery swapping, enhancing battery swapping efficiency, reducing the probability of lock body damage due to uneven force distribution among the plurality of lock bodies, improving the structural reliability of the lock assembly, and increasing the success rate of battery swapping.

In some embodiments, the battery tray includes a plurality of beam bodies, the beam body is provided with a hollow cavity, and the lock assembly is installed in the hollow cavity. In this technical solution, concealing the lock assembly within the beam body protects the lock assembly, reducing the probability of damage due to exposure and improving the service life of the overall structure.

In some embodiments, an outer wall of the beam body is provided with an unlocking hole at a position corresponding to an operating member of the lock assembly. In this technical solution, providing an unlocking hole on the outer wall of the beam body allows an unlocking member to be inserted into the unlocking hole to drive the operating member during battery removal, thereby transitioning the locking component to the unlocked state.

According to a third aspect, this application provides an electric apparatus including a battery and the battery tray described in the embodiments of the second aspect, where the battery is indirectly connected to the electric apparatus via being connected to the battery tray. In this technical solution, the plurality of lock bodies can achieve synchronized unlocking, improving the consistency of unlocking actions during battery removal, enhancing battery swapping efficiency, reducing the probability of lock body damage due to uneven force distribution among the plurality of lock bodies, improving the structural reliability of the lock assembly, and increasing the success rate of battery swapping.

In some embodiments, the electric apparatus is a vehicle, the battery tray includes at least two first beam bodies extending along a vehicle width direction and arranged oppositely along a vehicle length direction, each first beam body is installed with the lock assembly, and the operating member of the lock assembly is located at an end of the first beam body in the vehicle width direction. In this technical solution, arranging the plurality of lock bodies on the first beam bodies extending along the vehicle width direction enables synchronized unlocking, improving the consistency of unlocking actions during battery removal and enhancing battery swapping efficiency.

In some embodiments, the electric apparatus is a vehicle, the battery tray includes at least two second beam bodies extending along the vehicle length direction and arranged oppositely along the vehicle width direction, each second beam body is installed with the lock assembly, and the operating member of the lock assembly is located at an end of the second beam body in the vehicle width direction. In this technical solution, arranging the plurality of lock bodies on the second beam bodies extending along the vehicle length direction enables synchronized unlocking, improving the consistency of unlocking actions during battery removal and enhancing battery swapping efficiency.

According to a fourth aspect, this application provides a battery including the lock assembly described in the embodiments of the first aspect, where the lock assembly is disposed on at least one surface of the battery. In this technical solution, the plurality of lock bodies can achieve synchronized unlocking, improving the consistency of unlocking actions during battery swapping, enhancing battery swapping efficiency, reducing the probability of lock body damage due to uneven force distribution among the plurality of lock bodies, improving the structural reliability of the lock assembly, and increasing the success rate of battery swapping.

According to a fifth aspect, this application provides an electric apparatus including a main body, a battery, and the lock assembly described in the embodiments of the first aspect, where the lock assembly is configured to detachably lock the battery to the main body. In this technical solution, the plurality of lock bodies can achieve synchronized unlocking, improving the consistency of unlocking actions during battery swapping, enhancing battery swapping efficiency, reducing the probability of lock body damage due to uneven force distribution among the plurality of lock bodies, improving the structural reliability of the lock assembly, and increasing the success rate of battery swapping. The above description is only an overview of the technical solution of this application. To provide a clearer understanding of the technical means of this application and to enable implementation in accordance with the content of the description, and to make the above and other objectives, features, and advantages of this application more apparent and understandable, specific embodiments of this application are provided below.

### BRIEF DESCRIPTION OF DRAWINGS

By reading the detailed description of the preferred embodiments below, various other advantages and benefits will become clear to those skilled in the art. The drawings are provided solely for the purpose of illustrating the preferred embodiments and are not considered a limitation of this application. Throughout the drawings, identical components are denoted by identical reference numerals. In the drawings:
FIG. 1 shows a schematic diagram of a vehicle according to some embodiments of this application;
FIG. 2 shows a schematic diagram of a battery tray according to some embodiments of this application;
FIG. 3 shows an assembly diagram of a battery and a battery tray according to some embodiments of this application;
FIG. 4 shows an exploded view of a battery and a battery tray according to some embodiments of this application;
FIG. 5 shows a schematic diagram of a lock assembly according to some embodiments of this application;
FIG. 6 shows an exploded view of a lock assembly according to some embodiments of this application;
FIG. 7 shows a partial exploded view of a lock assembly according to some embodiments of this application;
FIG. 8 shows a partial schematic diagram of a lock assembly according to some embodiments of this application, where the locking component is in an unlocked state;
FIG. 9 shows a partial schematic diagram of a lock assembly according to some embodiments of this application, where the locking component is in a locked state;
FIG. 10 shows a schematic diagram of a lock body according to some embodiments of this application;
FIG. 11 shows a schematic diagram of a beam body according to some embodiments of this application;
FIG. 12 shows a cross-sectional view along line A-A in FIG. 11; and
FIG. 13 shows an enlarged view of portion B in FIG. 11.

Description of reference signs:
lock assembly 100, lock pin 200, battery tray 300, beam body 301, unlocking hole 302, electric apparatus 1000, battery 2000, battery main body 2001, docking structure 2002;
lock body 10, locking component 11, locking member 111, first locking portion 1111, locking passage 1112, mating locking member 112, second locking portion 1121, driving member 12, rotation center portion 121, protruding portion 122, fixed base 13, first rotation shaft 131, second rotation shaft 132, third rotation shaft 133, lock pin entrance 134;
connecting structure 20, connecting rod 21, and
operating member 30.

### DESCRIPTION OF EMBODIMENTS

To make the objectives, technical solutions, and advantages of the embodiments of this application clearer, the technical solutions in the embodiments of this application are described clearly below with reference to the drawings in the embodiments of this application. The described embodiments are a part of the embodiments of this application, but not all of them. Based on the embodiments in this application, all other embodiments obtained by those skilled in the art without creative efforts fall within the scope of protection of this application.

Unless otherwise defined, all technical and scientific terms used in this application have the same meanings as commonly understood by those skilled in the technical field of this application. Terms used in the description of this application are only for the purpose of describing specific embodiments and are not intended to limit this application. The terms "include" and "have" in the description, claims, and the above description of drawings of this application, as well as any variations thereof, are intended to cover non-exclusive inclusion. The terms "first", "second", and the like in the description, claims, or the above drawings of this application are used to distinguish different objects, not to describe a specific order or primary-secondary relationship.

The mention of "embodiment" in this application means that a specific feature, structure, or characteristic described in connection with the embodiment may be included in at least one embodiment of this application. The appearance of this phrase in various places in the description does not necessarily refer to the same embodiment, nor is it an independent or alternative embodiment mutually exclusive with other embodiments.

In the description of this application, it should be noted that, unless otherwise expressly specified and limited, the terms "install", "connect", "link", and "attach" should be understood in a broad sense. For example, a connection may be a fixed connection, a detachable connection, or an integral connection; it may be a direct connection, an indirect connection through an intermediate medium, or an internal communication between two components. For those skilled in the art, the specific meanings of the above terms in this application can be understood based on specific circumstances.

The term "and/or" in this application is merely an associative relationship describing associated objects, indicating that three relationships may exist. For example, A and/or B may indicate: A exists alone, A and B exist simultaneously, or B exists alone. Additionally, the character "/" in this application generally indicates that the associated objects before and after it are in an "or" relationship.

In the embodiments of this application, identical reference numerals denote identical components, and for brevity, detailed descriptions of identical components are omitted in different embodiments. It should be understood that the thickness, length, width, and other dimensions of various components in the embodiments of this application shown in the drawings, as well as the overall thickness, length, width, and other dimensions of an integrated device, are merely illustrative and should not constitute any limitation to this application.

The term "plurality" appearing in this application refers to two or more (including two).

In this application, a battery cell may include a lithium-ion secondary battery, a lithium-ion primary battery, a lithium-sulfur battery, a sodium-lithium-ion battery, a sodium-ion battery, or a magnesium-ion battery, and the embodiments of this application are not limited thereto. The battery cell may be in the form of a cylinder, a flat body, a cuboid, or other shapes, and the embodiments of this application are not limited thereto. Battery cells are generally classified into three types based on packaging: cylindrical battery cells, prismatic battery cells, and pouch battery cells, and the embodiments of this application are not limited thereto.

The battery mentioned in the embodiments of this application refers to a single physical module including one or more battery cells to provide higher voltage and capacity. The battery in the embodiments of this application includes a housing for encapsulating one or more battery cells or multiple battery modules. The housing can prevent liquids or other foreign objects from affecting the charging or discharging of the battery cells.

In a battery, multiple battery cells may be connected in series, in parallel, or in a mixed configuration, where the mixed configuration refers to a combination of series and parallel connections among multiple battery cells. Multiple battery cells may be directly connected in series, in parallel, or in a mixed configuration, and the entire structure formed by the multiple battery cells is accommodated in the housing. Alternatively, the battery may be formed by first connecting multiple battery cells in series, in parallel, or in a mixed configuration to form battery modules, and then multiple battery modules are connected in series, in parallel, or in a mixed configuration to form an integrated structure accommodated in the housing. Additionally, the battery may include other structures, such as a busbar component for achieving electrical connections between multiple battery cells.

In recent years, new energy vehicles have seen rapid development. In the field of electric vehicles, the battery, as the power source of electric vehicles, plays an irreplaceable and important role. As a core component of new energy vehicles, the battery has high requirements in terms of safety and cycle life.

The applicant has found that in traditional battery-swapping vehicle structures, the battery is generally secured by a bracket, and the bracket is typically equipped with multiple battery-swapping locks, each having a lock body. Each lock body is equipped with a corresponding unlocking member. Since multiple lock bodies are independently unlocked using their respective unlocking members, the unlocking actions of different lock bodies are prone to inconsistency, leading to time deviations or even failures due to errors in the action of individual unlocking members, resulting in unlocking failures of the battery-swapping locks. This can lead to situations where, during the process of detaching the battery pack from the vehicle, some parts remain locked and connected, easily causing damage to the lock body or lock pin structure, or even damage to the battery pack structure. Consequently, the lock body or lock pin requires frequent maintenance. Additionally, this delays the battery-swapping process, extends the battery-swapping time, and affects battery swapping efficiency.

Based on the above considerations, after in-depth research, the applicant has designed a lock assembly including a plurality of lock bodies and a connecting structure, where the lock body includes a locking component and a driving member, and the locking component can transition from a locked state to an unlocked state under driving of the driving member. The connecting structure is connected to the driving members of the plurality of lock bodies, enabling linkage of the driving members of the plurality of lock bodies, allowing the locking components of the plurality of lock bodies to be simultaneously driven by the corresponding driving members, thereby enabling the locking components of the plurality of lock bodies to transition from the locked state to the unlocked state simultaneously.

By connecting the connecting structure to the driving members of the plurality of lock bodies, the driving members of the plurality of lock bodies can be linked, enabling the locking components of the plurality of lock bodies to simultaneously transition from the locked state to the unlocked state. This allows the plurality of lock bodies to achieve synchronized unlocking, reducing the likelihood of inconsistent unlocking among multiple locks on the same product, improving the consistency of unlocking actions during battery swapping, enhancing battery swapping efficiency, reducing the probability of lock body damage due to uneven force distribution among the plurality of lock bodies, improving the structural reliability of the lock assembly, and increasing the success rate of battery swapping.

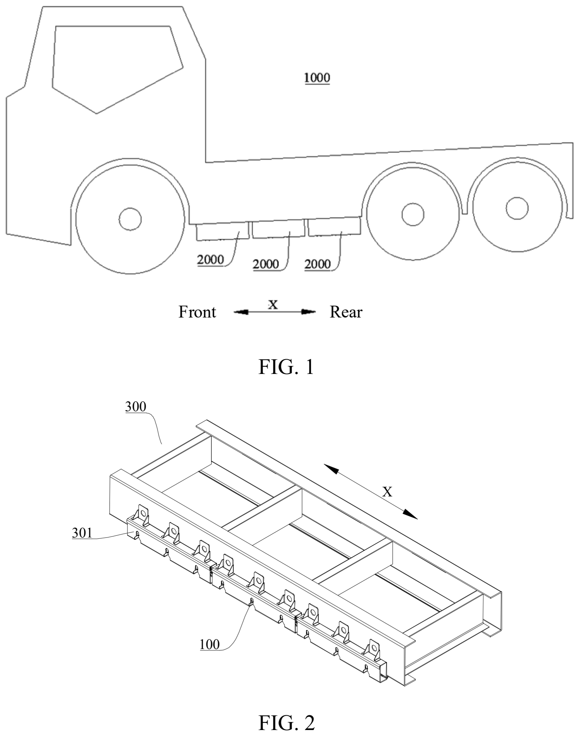

Referring to FIG. 1, FIG. 1 shows a schematic structural diagram of an electric apparatus 1000 according to some embodiments of this application. The electric apparatus 1000 may be a fuel vehicle, a gas vehicle, or a new energy vehicle, where the new energy vehicle may be a pure electric vehicle, a hybrid vehicle, or an extended-range vehicle. The battery 2000 may be used to supply power to the electric apparatus 1000, for example, the battery 2000 may serve as an operational power source for the electric apparatus 1000. The electric apparatus 1000 may further include a controller and a motor, where the controller is used to control the battery 2000 to supply power to the motor, for example, for the operational power requirements of starting, navigating, and driving the electric apparatus 1000. In some embodiments of this application, the battery 2000 may not only serve as an operational power source for the electric apparatus 1000 but also as a driving power source for the electric apparatus 1000, replacing or partially replacing fuel or natural gas to provide driving power for the electric apparatus 1000.

The electric apparatus 1000 disclosed in the embodiments of this application may include, but is not limited to, vehicles, mobile phones, tablets, laptops, ships, spacecraft, electric toys, and electric tools. Vehicles may include fuel vehicles, gas vehicles, new energy vehicles, or rail vehicles, where new energy vehicles may be pure electric vehicles, hybrid vehicles, or extended-range vehicles. Spacecraft include airplanes, rockets, space shuttles, and spaceships. Electric toys include stationary or mobile electric toys, such as game consoles, electric vehicle toys, electric ship toys, and electric airplane toys. Electric tools include metal-cutting electric tools, grinding electric tools, assembly electric tools, and railway electric tools, such as electric drills, electric grinders, electric wrenches, electric screwdrivers, electric hammers, impact drills, concrete vibrators, and electric planers.

FIG. 2 shows a schematic structural diagram of a battery tray 300 according to some embodiments of this application. The battery tray 300 includes a plurality of beam bodies 301, the beam body 301 is provided with a hollow cavity, and a lock assembly 100 is installed in the hollow cavity. That is, the battery tray 300 includes lock bodies 10 and a connecting structure 20. The battery tray 300 may be disposed on the electric apparatus 1000, for example, at the bottom of the electric apparatus 1000. Alternatively, the battery tray 300 may be disposed on a side portion of the electric apparatus 1000, with the battery tray 300 extending outward.

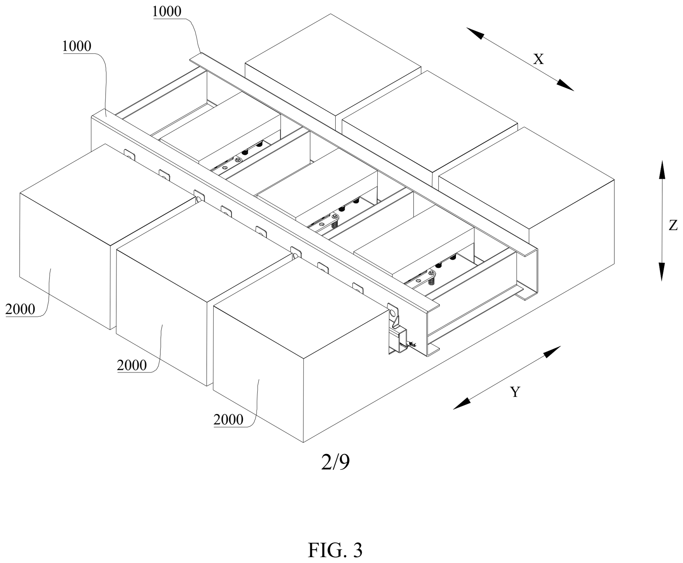

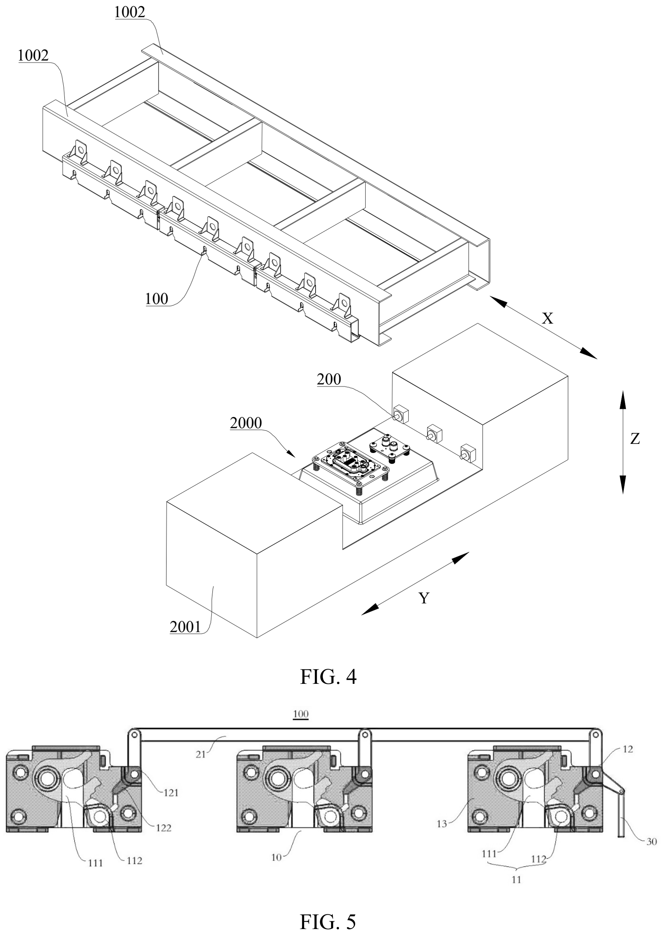

FIG. 3 and FIG. 4 show an assembly diagram and an exploded view of a battery and a battery tray according to some embodiments of this application. The battery 2000 may include a battery main body 2001 and a lock pin 200. When the battery 2000 approaches the battery tray 300, the lock pin 200 and the lock assembly 100 move relatively in a second direction Z until the lock pin 200 engages with the locking component 11, thereby securing the battery 2000 to the battery tray 300. Alternatively, the lock assembly 100 may be disposed on the battery, with the lock pin 200 disposed on the battery tray 300, or the lock pin 200 may be disposed on the electric apparatus 1000, such as on the vehicle body. By engaging the lock pin 200 with the lock assembly 100, the battery 2000 is secured to the battery tray 300 or the electric apparatus 1000.

The number and arrangement of battery cells in the battery main body 2001 are not limited. The battery main body 2001 may include a plurality of battery cells arranged along a length direction of the vehicle, a plurality of battery cells arranged along a height direction of the vehicle, or a plurality of battery cells arranged along a width direction of the vehicle.

As shown in FIG. 4, the battery 2000 includes a docking structure 2002, where the docking structure 2002 is used to dock with the electric apparatus 1000 to achieve electrical conduction and/or liquid conduction. In the above embodiment, since the battery 2000 includes the docking structure 2002, electrical conduction, liquid conduction, or both electrical and liquid conduction with the electric apparatus 1000 can be achieved. For example, when the docking structure 2002 achieves electrical conduction, current transmission between the electric apparatus 1000 and the battery 2000 can be realized, enabling the battery 2000 to supply power to the electric apparatus 1000 or enabling the electric apparatus 1000 to control the battery 2000. For example, when the docking structure 2002 achieves liquid conduction, heat transfer between a coolant system of the electric apparatus 1000 and the battery 2000 can be realized, allowing the coolant system to regulate the temperature of the battery 2000 to enhance the operational reliability and safety of the battery 2000, or allowing the coolant system to absorb residual heat from the battery 2000 to meet the heat source requirements of a heat pump air conditioning system of the electric apparatus 1000, which will not be elaborated here.

Below, with reference to FIG. 5 to FIG. 10, the lock assembly 100 according to embodiments of this application is described.

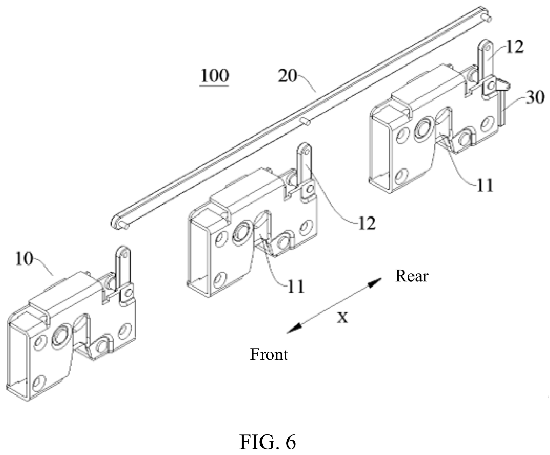

As shown in FIG. 5 and FIG. 6, the lock assembly 100 according to some embodiments of this application includes: a plurality of lock bodies 10, the lock body 10 including a locking component 11 and a driving member 12, where the locking component 11 can transition from a locked state to an unlocked state under driving of the driving member 12; and a connecting structure 20, where the connecting structure 20 is connected to the driving members 12 of the plurality of lock bodies 10, enabling linkage of the driving members 12 of the plurality of lock bodies 10, allowing the locking components 11 of the plurality of lock bodies 10 to be simultaneously driven by the corresponding driving members 12, causing each locking component 11 to transition from the locked state to the unlocked state.

The lock body 10 is used to lock a lock pin, where the lock pin is fixed to a structure to be secured, such as the battery 2000. When the battery 2000 approaches the lock body 10, engagement between the lock pin and the locking component 11 allows the locking component 11 to switch from an unlocked state to a locked state, and the battery 2000 can be simultaneously connected to multiple lock bodies 10. When the battery 2000 needs to be disengaged from the lock body 10, the driving member 12 drives the locking component 11 to transition from the locked state to the unlocked state, achieving unlocking of the battery 2000. The driving members 12 of the plurality of lock bodies 10 are connected through the connecting structure 20, so that when one driving member 12 is driven to unlock, other driving members 12 move synchronously, enabling synchronized unlocking of the plurality of lock bodies 10.

In the technical solution of the embodiments of this application, by connecting the connecting structure 20 to the driving members 12 of the plurality of lock bodies 10, the driving members 12 of the plurality of lock bodies 10 can be linked, enabling the locking components 11 of the plurality of lock bodies 10 to simultaneously transition from the locked state to the unlocked state. This allows the plurality of lock bodies 10 to achieve synchronized unlocking, reducing the likelihood of inconsistent unlocking among multiple locks on the same product, improving the consistency of unlocking actions during battery swapping, enhancing battery swapping efficiency, reducing the probability of damage to the lock body 10 due to uneven force distribution among the plurality of lock bodies 10, improving the structural reliability of the lock assembly 100, and increasing the success rate of battery swapping.

As shown in FIG. 5 and FIG. 6, in some embodiments, the lock assembly 100 further includes an operating member 30, where the operating member 30 is connected to at least one of the driving members 12, and the operating member 30 is configured to control the at least one driving member 12 to drive a corresponding locking component 11 to transition from the locked state to the unlocked state.

Here, the operating member 30 may be connected to the driving member 12 of one lock body 10. Since the driving members 12 of the plurality of lock bodies 10 are linked through the connecting structure 20, other driving members 12 can move synchronously under the action of the connecting structure 20, with each driving member 12 driving the corresponding locking component 11 to switch from the locked state to the unlocked state, achieving synchronized unlocking of the plurality of lock bodies 10. That is, the operating member 30 can control the operation of the entire lock assembly 100 via the driving member 12 and the connecting structure 20 to which the operating member 30 is connected.

Alternatively, the operating member 30 may be connected to the driving members 12 of multiple lock bodies 10, and a plurality of operating members 30 may be provided, with the plurality of operating members 30 connected to the plurality of driving members 12 in one-to-one correspondence. An operating member 30 controls a driving member 12 to drive a corresponding locking component 11 to switch to the unlocked state, while other driving members 12 move synchronously under the action of the connecting structure 20, achieving synchronized unlocking of the plurality of lock bodies 10.

In some embodiments, the lock assembly 100 further includes an operating member 30, where the operating member 30 is connected to the connecting structure 20, and the operating member 30 uses the connecting structure 20 to drive the driving members 12 of the plurality of lock bodies 10 to move, enabling the locking components 11 of the plurality of lock bodies 10 to be driven by the corresponding driving members 12 to transition from the locked state to the unlocked state.

The operating member 30 may be connected to one end of the connecting structure 20 or to the middle of the connecting structure 20. When the operating member 30 operates to move the connecting structure 20, the connecting structure 20 drives the plurality of driving members 12 to move, and each driving member 12 can drive the corresponding locking component 11 to switch to the unlocked state, achieving synchronized unlocking of the plurality of lock bodies 10. That is, the operating member 30 indirectly controls the movement of the driving members 12 by controlling the movement of the connecting structure 20.

In the above technical solution, by connecting the operating member 30 to the driving member 12 or the connecting structure 20, the locking components 11 of the plurality of lock bodies 10 can simultaneously transition from the locked state to the unlocked state through the operation of the operating member 30, enabling synchronized unlocking of the plurality of lock bodies 10 and improving battery swapping efficiency.

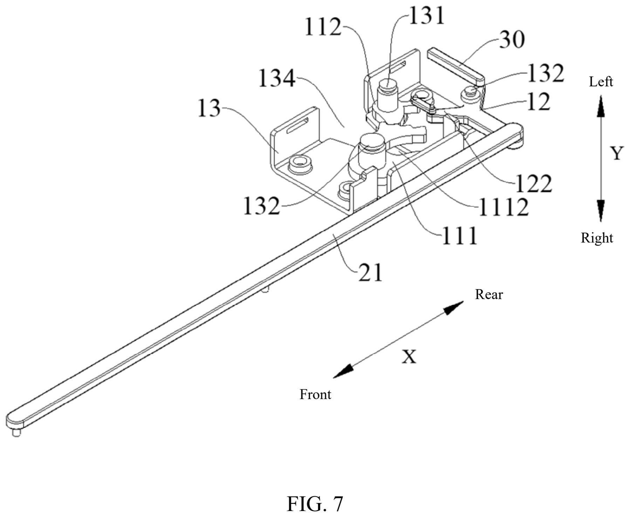

As shown in FIG. 7 to FIG. 9, in some embodiments, the connecting structure 20 includes a connecting rod 21, and the driving members 12 of the plurality of lock bodies 10 are all connected to the connecting rod 21.

Here, the plurality of driving members 12 may be pivotally connected to the connecting rod 21, thereby improving the smoothness of movement and reducing structural interference when the connecting rod 21 and the plurality of driving members 12 move.

In the above technical solution, connecting the driving members 12 of the plurality of lock bodies 10 through the connecting rod 21 drives synchronized movement of the plurality of driving members 12 through the movement of the connecting rod 21, resulting in a simple structure, convenient assembly, and reliable coordination.

Alternatively, the connecting structure 20 may be a connecting plate, a lead screw, or other connecting structures.

As shown in FIG. 7, in some embodiments, the connecting rod 21 extends along a first direction, and the plurality of lock bodies 10 are arranged at intervals along the first direction.

Here, the first direction is the front-rear direction shown in FIG. 7, with the connecting rod 21 extending along the front-rear direction and the plurality of lock bodies 10 arranged at intervals in the front-rear direction. This facilitates improved dispersion and uniformity of force distribution, mitigates issues of stress concentration, enhances the connection reliability between each lock body 10 and the lock pin 200, and improves the installation stability and reliability of the battery. Additionally, when lifting the battery 2000 vertically upward to connect multiple lock pins 200 to the lock bodies 10, the multiple lock pins 200 do not interfere with each other, allowing flexible and diverse designs of the lock pin 200 structure.

In the above technical solution, aligning the extension direction of the connecting rod 21 with the arrangement direction of the plurality of lock bodies 10 facilitates synchronized unlocking of the plurality of lock bodies 10 by the connecting rod 21, reduces the space occupied by the lock assembly 100, and improves the rationality of the layout.

In some embodiments, the lock body 10 includes a fixed base 13, the driving member 12 is rotatable relative to the fixed base 13, and the locking component 11 can transition from the locked state to the unlocked state with rotation of the driving member 12.

Here, the fixed base 13 may be installed in the beam body 301 of the battery tray 300 using fasteners or may be snap-fitted to the beam body 301 of the battery tray 300 using a snap structure. The fixed base 13 may serve as the outer shell of the entire lock body 10, and the fixed base 13 may be formed by two parts fastened together. The driving member 12 is disposed in the fixed base 13, and the locking component 11 may also be disposed on the fixed base 13. The driving member 12 can rotate under the action of the connecting rod 21 or the operating member 30, driving the locking component 11 to transition from the locked state to the unlocked state.

In the above technical solution, installing the driving member 12 on the fixed base 13 secures the driving member 12, and the state of the locking component 11 is changed through the rotation of the driving member 12, facilitating the installation of the overall structure.

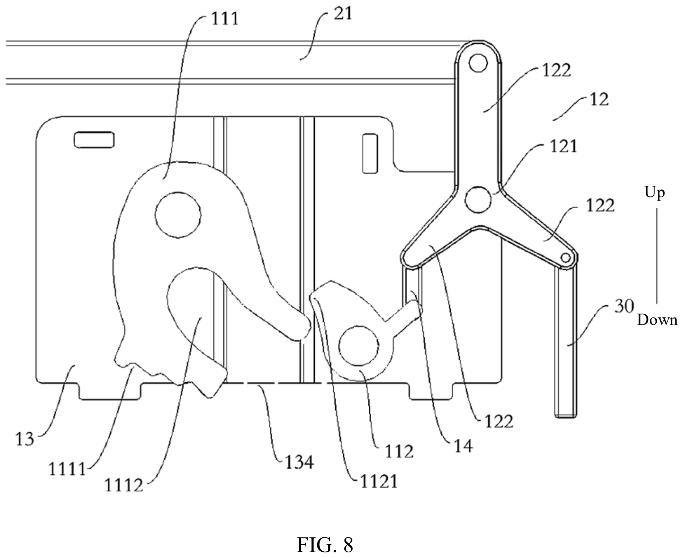

As shown in FIG. 8 to FIG. 10, in some embodiments, the driving member 12 includes a rotation center portion 121 and a protruding portion 122 protruding circumferentially from the rotation center portion 121. The fixed base 13 is provided with a first rotation shaft 131, the first rotation shaft 131 passes through the rotation center portion 121, and the connecting structure 20 is rotatably connected to the protruding portion 122.

The rotation center portion 121 is rotatably connected to the fixed base 13 through the first rotation shaft 131. The protruding portion 122 protrudes from the outer periphery of the rotation center portion 121 and may be a protruding plate, a protruding rod, or the like. The protruding portion 122 may extend along the radial direction of the rotation center portion, facilitating connection between the protruding portion 122 and the connecting structure 20. The driving member 12 is an integral piece, with the protruding portion 122 fixedly connected to or integrally formed with the rotation center portion 121. The protruding portion 122 is rotatably connected to the connecting rod 21 through a rotation shaft.

In the above technical solution, configuring the driving member 12 with a rotation center portion 121 and a protruding portion 122 facilitates both the rotational connection of the driving member 12 with the fixed base 13 and the coordination of the driving member 12 with the locking component 11 or the connecting structure 20, resulting in a simple structure, reduced weight and reduced space occupation of the driving member 12, lower overall weight of the lock assembly 100, reduced manufacturing costs, and easier installation and arrangement of the lock assembly 100.

As shown in FIG. 7 to FIG. 10, in some embodiments, a plurality of protruding portions 122 are provided, the connecting structure 20 is rotatably connected to one of the protruding portions 122, and another of the protruding portions 122 is connected to the operating member 30.

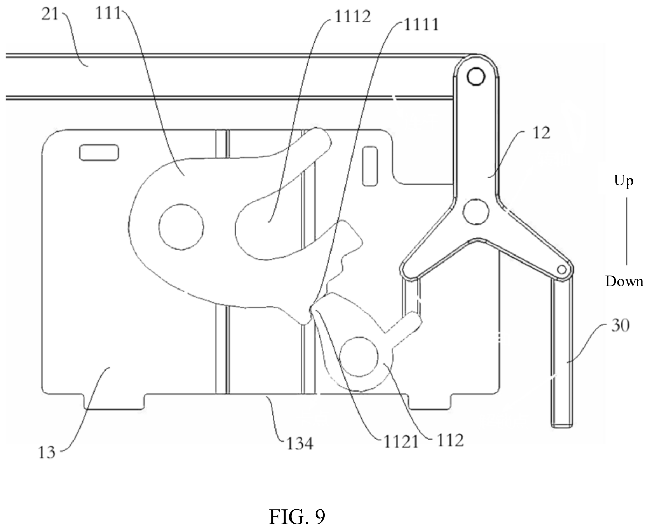

As shown in FIG. 8 and FIG. 9, the driving member 12 includes three protruding portions 122, where the three protruding portions 122 are arranged at intervals along the outer periphery of the rotation center portion 121. One protruding portion 122 is connected to the connecting rod 21, another protruding portion 122 is connected to the operating member 30, and yet another protruding portion 122 is connected to the locking component 10, for example, the protruding portion 122 is connected to the locking member 111 via a link rod 14. Thus, when the operating member 30 is operated, for example, moved upward, the operating member 30 drives the protruding portion 122 connected thereto to move upward, causing the driving member 12 to rotate counterclockwise. The protruding portion 122 connected to the locking component 10 moves downward, driving the locking component 10 to switch from the locked state to the unlocked state. The protruding portion 122 connected to the connecting rod 21 moves leftward, driving the connecting rod 21 to move leftward, and the connecting rod 21 drives other driving members 12 to rotate counterclockwise synchronously, thereby driving other locking components 10 to unlock synchronously.

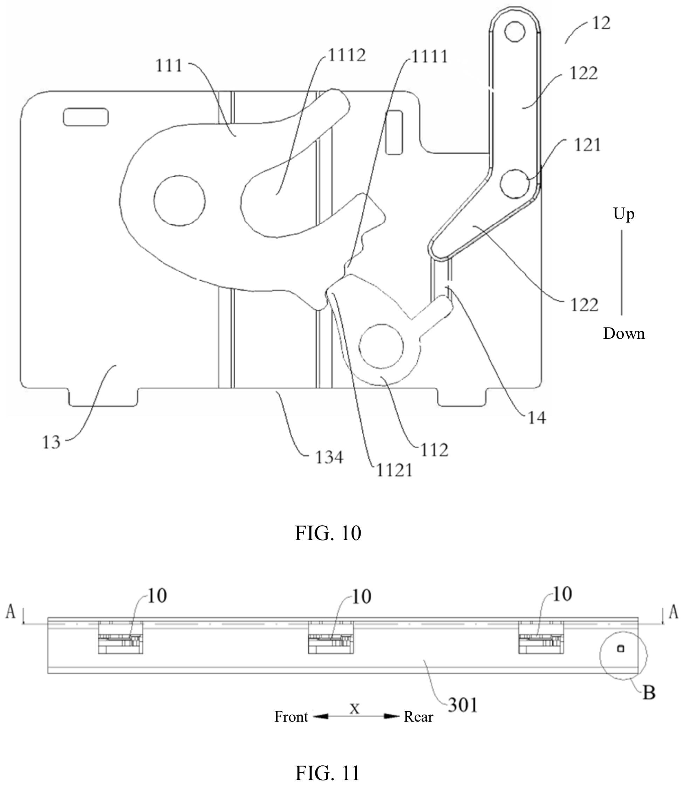

As shown in FIG. 10, in some embodiments, the driving member 12 includes two protruding portions 122, where the two protruding portions 122 are arranged at intervals along the outer periphery of the rotation center portion 121. One protruding portion 122 is connected to the connecting rod 21, and the other protruding portion 122 is connected to the locking component 10. This driving member 12 is not connected to the operating member 30. This driving member 12 is connected to the connecting rod 21 through one protruding portion 122, so this driving member 12 can rotate synchronously with other driving members 12 under the action of the connecting rod 21, enabling the corresponding locking component 10 to switch to the unlocked state.

In the above technical solution, connecting the operating member 30 to the protruding portion 122 enables the operating member 30 to drive the driving member 12, thereby transitioning the corresponding locking component 11 to the unlocked state. Connecting to another protruding portion 122 through the connecting structure 20 allows the operating member 30 to drive one locking component 11 to unlock while other locking components 11 are synchronously unlocked through the transmission of the connecting structure 20, resulting in a simple structure and convenient connection.

As shown in FIG. 7 to FIG. 10, in some embodiments, the locking component 11 includes a locking member 111, the locking member 111 has a locking passage 1112 for receiving a lock pin 200, and the locking member 111 is rotatable relative to the fixed base 13, enabling an opening of the locking passage 1112 to face different directions when the locking component 11 is in the locked state and when the locking component 11 is in the unlocked state.

As shown in FIG. 8, in some embodiments, when the locking component 11 is in the unlocked state, the opening of the locking passage 1112 faces downward, possibly inclined downward, facilitating insertion of the lock pin 200 into the locking passage 1112 from the lower side. As the lock pin 200 is being inserted, the lock pin 200 drives the locking member 111 to rotate upward until the locking component 11 switches to the locked state, at which point the opening of the locking passage 1112 faces upward, possibly inclined upward. Under its own weight, the lock pin 200 tends to move downward but cannot disengage from the locking passage 1112, securing the lock pin 200 within the locking member 111.

In the above technical solution, providing a rotatable locking member 111 allows the locking passage 1112 defined by the locking member 111 to face different directions, enabling the locking component 11 to switch between the locked state and the unlocked state, improving the convenience of the battery swapping process and enhancing battery swapping efficiency.

As shown in FIG. 8 to FIG. 10, in some embodiments, the fixed base 13 includes a lock pin entrance 134, the lock assembly 100 is configured such that when the locking component 11 is in the unlocked state, the opening of the locking passage 1112 faces the lock pin entrance 134; and when the locking component 11 is in the locked state, the opening of the locking passage 1112 does not face the lock pin entrance 134.

The lower side of the fixed base 13 has a lock pin entrance 134. When the locking component 11 is in the unlocked state, the opening of the locking passage 1112 faces the lock pin entrance 134, allowing the lock pin 200 to enter the fixed base 13 through the lock pin entrance 134 and simultaneously enter the locking passage 1112. As the lock pin 200 is being inserted, the lock pin 200 drives the locking member 111 to rotate upward, switching the locking component 11 from the unlocked state to the locked state, at which point the opening of the locking passage 1112 is misaligned with the lock pin entrance 134, further preventing the lock pin 200 from disengaging from the locking passage 1112.

In the above technical solution, aligning the opening of the locking passage 1112 with the lock pin entrance 134 facilitates entry of the lock pin into the locking component 11 when the locking component 11 is in the unlocked state, while the lock pin can drive the locking component 11 to transition from the unlocked state to the locked state. At this time, the opening of the locking passage 1112 is misaligned with the lock pin entrance 134, achieving locking of the lock pin and preventing disengagement, with convenient locking and improved lock swapping efficiency.

As shown in FIG. 7, in some embodiments, the fixed base 13 is provided with a second rotation shaft 132, and the second rotation shaft 132 passes through the locking member 111.

The locking member 111 is fixed to the fixed base 13 through the second rotation shaft 132. By rotating, the locking member 111 causes the opening of the locking passage 1112 to face different directions. When the lock pin 200 enters the locking passage 1112, it can drive the locking member 111 to rotate, enabling the locking component 11 to switch to the locked state. Through driving of the driving member 12, the locking member 111 can rotate in the opposite direction, enabling the locking component 11 to switch to the unlocked state.

In the above technical solution, installing the locking member 111 on the fixed base 13 secures the locking member 111. When the locking component 11 switches between the unlocked state and the locked state, the locking member 111 rotates along the second rotation shaft 132, enabling convenient switching and high reliability, thereby improving battery swapping efficiency and stability.

As shown in FIG. 7 to FIG. 10, in some embodiments, the locking component 11 further includes a mating locking member 112, the locking member 111 is provided with a first locking portion 1111, the mating locking member 112 is provided with a second locking portion 1121, and the mating locking member 112 is configured to engage with the first locking portion 1111 through the second locking portion 1121 when the locking member 111 is in the locked state.

The first locking portion 1111 may be a slot, and the second locking portion 1121 may be a protrusion. The protrusion can be inserted into the slot to achieve engagement of the two, securing the locking component 11 in the locked state. This provides a convenient connection, effective locking of the lock pin 200, and reduces the safety risk of the locking component 11 automatically switching to the unlocked state.

The outer wall surface of the locking member 111 has a plurality of first locking portions 1111, and the second locking portion 1121 of the mating locking member 112 can engage with one of the plurality of first locking portions 1111 to secure the locking component 11 in the locked state. Providing multiple first locking portions 1111 facilitates engagement with the mating locking member 112, reducing the likelihood of locking failure between the second locking portion 1121 and the first locking portion 1111, further improving the reliability of locking the lock pin 200.

In the above technical solution, engagement of the first locking portion 1111 and the second locking portion 1121 prevents the locking member 111 from rotating toward the unlocked state, enhancing the stability of the locking component 11 in the locked state.

In some examples, an elastic member is further provided between the fixed base 13 and the locking member 111. The elastic member may be a torsion spring, disposed on the second rotation shaft 132, with the two legs of the torsion spring connected to the fixed base 13 and the locking member 111, respectively. When the locking component 11 is in the locked state, the locking member 111 is in a first position, and the opening of the locking passage 1112 does not face the lock pin entrance 134. When the locking component 11 is in the unlocked state, the locking member 111 is in a second position, and the opening of the locking passage 1112 faces the lock pin entrance 134. Under the action of the elastic member, the locking member always tends to move from the first position to the second position. When the mating locking member 112 abuts and engages with the locking member 111, the locking member 111 cannot rotate to the second position. When the mating locking member 112 disengages from the locking member 111, the locking member 111 can rotate back to the second position under the elastic force of the elastic member, achieving the transition of the locking component 11 to the unlocked state.

As shown in FIG. 8 to FIG. 10, in some embodiments, the driving member 12 is connected to the mating locking member 112, and the mating locking member 112 can move under driving of the driving member 12 to disengage the second locking portion 1121 from the first locking portion 1111.

The mating locking member 112 is rotatably disposed on the fixed base 13. The driving member 12 may be directly connected to the mating locking member 112 or connected to the mating locking member 112 via a link rod 14 or another structure. When the driving member 12 moves, it can drive the mating locking member 112 to rotate, causing the second locking portion 1121 to disengage from the first locking portion 1111. The locking member 111 can then rotate until the opening of the locking passage 1112 faces the lock pin entrance 134, switching the locking component 11 from the locked state to the unlocked state, allowing the lock pin 200 to disengage from the locking passage 1112, achieving unlocking.

In the above technical solution, the driving member 12 drives the mating locking member 112 to move, disengaging the second locking portion 1121 from the first locking portion 1111, enabling the locking component 11 to switch to the unlocked state, with convenient and quick unlocking, thereby improving battery swapping efficiency.

As shown in FIG. 8 to FIG. 10, in some embodiments, the driving member 12 includes the rotation center portion 121 and the protruding portion 122 protruding circumferentially from the rotation center portion 121, where the protruding portion 122 is provided in plurality and the mating locking member 112 is connected to at least one of the plurality of protruding portions 122.

The rotation center portion 121 is rotatably connected to the fixed base 13 through the first rotation shaft 131. The protruding portion 122 protrudes from the outer periphery of the rotation center portion 121 and may be a protruding plate, a protruding rod, or the like. The protruding portion 122 may extend along the radial direction of the rotation center portion, facilitating connection between the protruding portion 122 and the mating locking member 112. Additionally, a link rod 14 is provided between the protruding portion 122 and the mating locking member 112, with one end of the link rod 14 rotatably connected to the protruding portion 122 and another end of the link rod 14 rotatably connected to the mating locking member 112.

In the above technical solution, providing multiple protruding portions 122 on the outer periphery of the rotation center portion 121 facilitates coordination between the driving member 12 and the mating locking member 112, resulting in a simple structure, reduced weight and reduced space occupation of the driving member 12, lower overall weight of the lock assembly 100, reduced manufacturing costs, and easier installation and arrangement of the lock assembly 100.

As shown in FIG. 7 to FIG. 9, in some embodiments, the mating locking member 112 is rotatable relative to the fixed base 13, and the mating locking member 112 can rotate under driving of the driving member 12 to disengage the second locking portion 1121 from the first locking portion 1111.

As shown in FIG. 7, the mating locking member 112 is fixed to the fixed base 13 through the third rotation shaft 133. When the lock pin 200 enters the locking passage 1112, the locking member 111 rotates synchronously with the upward movement of the lock pin 200, and the mating locking member 112 can rotate clockwise accordingly until the first locking portion 1111 engages with the second locking portion 1121, securing the locking component 11 in the locked state. When the driving member 12 is operated, the mating locking member 112 rotates further clockwise, causing the first locking portion 1111 to disengage from the second locking portion 1121, and the locking member 111 rotates in the opposite direction, switching the locking component 11 to the unlocked state.

In the above technical solution, rotatably mounting the mating locking member 112 on the fixed base 13 secures the mating locking member 112. Rotation of the mating locking member 112 changes the engagement state of the mating locking member 112 with the locking member 111, thereby changing the state of the locking component 11, with high reliability, good stability, and easy installation of the overall structure.

As shown in FIG. 5 to FIG. 10, in some embodiments, the lock body 10 includes a fixed base 13, the fixed base 13 includes a lock pin entrance 134, the locking component 11 includes a locking member 111 and a mating locking member 112, the locking member 111 has a locking passage 1112 for receiving a lock pin, where the locking component 11 is configured such that when in the locked state, an opening of the locking passage 1112 does not face the lock pin entrance 134 and the mating locking member 112 abuts and engages with the locking member 111; and the locking component 11 is further configured such that when in the unlocked state, the mating locking member 112 disengages from the locking member 111, enabling the opening of the locking passage 1112 to face the lock pin entrance 134.

The lower side of the fixed base 13 has a lock pin entrance 134. When the locking component 11 is in the unlocked state, the mating locking member 112 disengages from the locking member 111, and the opening of the locking passage 1112 faces downward, possibly inclined downward, facilitating insertion of the lock pin 200 into the locking passage 1112 from the lower side. As the lock pin 200 is being inserted, the lock pin 200 drives the locking member 111 to rotate upward until the locking component 11 switches to the locked state, at which point the opening of the locking passage 1112 faces upward, possibly inclined upward. The mating locking member 112 abuts and engages with the locking member 111, preventing the locking member 111 from rotating, and the lock pin 200 cannot disengage from the locking passage 1112, securing the lock pin 200 within the locking member 111.

The mating locking member 112 may be arranged opposite the locking member 111 on two sides of the movement direction of the lock pin 200. The mating locking member 112 may always have a force tending to rotate in a direction approaching the locking member 111. When the lock pin 200 moves, it drives the locking member 111 to move, simultaneously causing the mating locking member 112 to move. At the exact moment the lock pin 200 is secured in the locking passage 1112, the second locking portion 1121 engages with one of the first locking portions 1111, securing the locking component 11 in the locked state, thereby achieving effective locking of the lock pin 200.

In the above technical solution, aligning the opening of the locking passage 1112 with the lock pin entrance 134 and disengaging the mating locking member 112 from the locking member 111 facilitates entry of the lock pin into the locking component 11 when the locking component 11 is in the unlocked state, while the lock pin can drive the locking component 11 to transition from the unlocked state to the locked state. At this time, by misaligning the opening of the locking passage 1112 with the lock pin entrance 134 and by engaging the mating locking member 112 with the locking member 111, locking of the lock pin is achieved, preventing disengagement, with convenient locking and improved lock swapping efficiency.

As shown in FIG. 7, in some embodiments, the driving member 12, the locking member 111, and the mating locking member 112 are each configured to be rotatable relative to the fixed base 13. The fixed base 13 is provided with a first rotation shaft 131, a second rotation shaft 132, and a third rotation shaft 133. The first rotation shaft 131 passes through the driving member 12, the second rotation shaft 132 passes through the locking member 111, the third rotation shaft 133 passes through the mating locking member 112, and the first rotation shaft 131, the second rotation shaft 132, and the third rotation shaft 133 are not arranged in a same plane.

The driving member 12 is rotatably disposed on the fixed base 13 through the first rotation shaft 131, the locking member 111 is rotatably disposed on the fixed base 13 through the second rotation shaft 132, and the mating locking member 112 is rotatably disposed on the fixed base 13 through the third rotation shaft 133. This allows the motion of each structure within the lock body 10 to be rotational, facilitating reliable coordination and improving structural stability. The three rotation shafts are not arranged in the same plane, meaning arrangement direction of the three rotation shafts may be perpendicular to the extension direction of the rotation shafts. Here, the extension directions of the three rotation shafts may be the same, for example, each rotation shaft extends along the left-right direction shown in FIG. 7.

In the above technical solution, not arranging the three rotation shafts in the same plane reduces the overall size of the lock body 10, thereby reducing the overall size of the lock assembly 100, facilitating the installation and arrangement of the lock assembly 100.

As shown in FIG. 2 and FIG. 11 to FIG. 13, according to a second aspect, this application provides a battery tray 300, where the battery tray 300 includes the lock assembly 100 described in the embodiments of the first aspect. In this technical solution, the plurality of lock bodies 10 can achieve synchronized unlocking, reducing the likelihood of inconsistent unlocking among multiple locks on the same product, improving the consistency of unlocking actions during battery swapping, enhancing battery swapping efficiency, reducing the probability of damage to the lock body 10 due to uneven force distribution among the plurality of lock bodies 10, improving the structural reliability of the lock assembly 100, and increasing the success rate of battery swapping.

As shown in FIG. 2 and FIG. 11 to FIG. 13, in some embodiments, the battery tray 300 includes a plurality of beam bodies 301, the beam body 301 is provided with a hollow cavity, and the lock assembly 100 is installed in the hollow cavity.

In some examples, the beam body 301 of the battery tray 300 may extend along the length direction of the battery tray 300 (for example, the front-rear direction shown in FIG. 2). In the length direction of the battery tray 300, one beam body 301 may be provided, or multiple beam bodies 301 may be provided, with each beam body 301 being provided with one lock assembly 100 inside. Alternatively, each beam body 301 may be provided with a plurality of lock assemblies 100.

In the above technical solution, concealing the lock assembly 100 within the beam body 301 protects the lock assembly 100, reducing the probability of damage of the lock assembly 100 due to exposure and improving the service life of the overall structure.

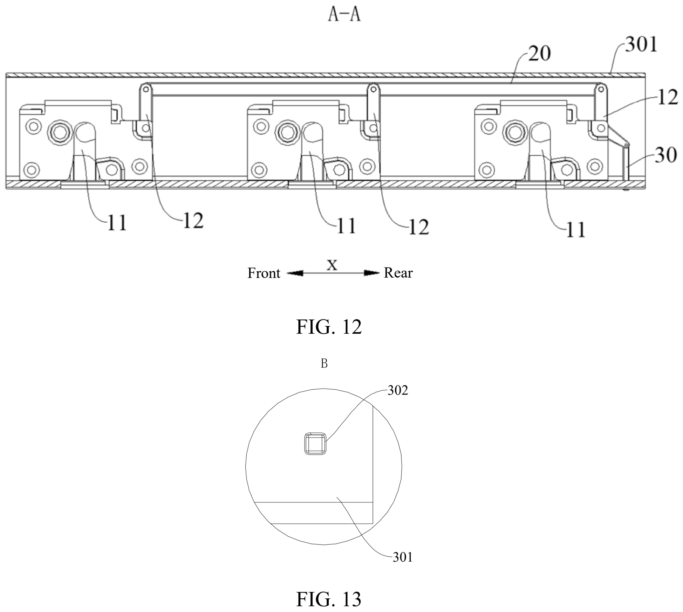

As shown in FIG. 11 and FIG. 13, in some embodiments, an outer wall of the beam body 301 is provided with an unlocking hole 302 at a position corresponding to an operating member 30 of the lock assembly 100. During battery removal, an unlocking member can be inserted into the unlocking hole 302 to drive the operating member 30, thereby transitioning the locking component 11 to the unlocked state.

The lock assembly 100 is disposed in the hollow cavity of the beam body 301, and the unlocking hole 302 may be provided on the outer wall of the beam body 301, with the operating member 30 of the lock assembly 100 positioned corresponding to the unlocking hole 302. In some embodiments, the operating member 30 may be entirely located within the unlocking hole 302, and the unlocking member drives the operating member 30 by extending into the unlocking hole 302 for unlocking. In other embodiments, the lower end of the operating member 30 may partially extend out of the unlocking hole 302, and the unlocking member engages with the operating member 30 outside the unlocking hole 302 and then drives the operating member 30 for unlocking. The unlocking member may be provided on a battery-swapping device used for removing the battery, and the battery-swapping device drives the operating member 30 through the unlocking member.

According to a third aspect, this application provides an electric apparatus 1000, where the electric apparatus 1000 includes a battery and the battery tray 300 described in the embodiments of the second aspect, where the battery is connected to the battery tray 300 to be indirectly connected to the electric apparatus 1000. In this technical solution, the plurality of lock bodies 10 can achieve synchronized unlocking, improving the consistency of unlocking actions during battery removal, enhancing battery swapping efficiency, reducing the probability of damage to the lock body 10 due to uneven force distribution among the plurality of lock bodies 10, improving the structural reliability of the lock assembly 100, and increasing the success rate of battery swapping.

In some embodiments, the electric apparatus 1000 is a vehicle, the battery tray 300 includes at least two first beam bodies, the first beam bodies extend along a vehicle width direction and are arranged oppositely along a vehicle length direction, each first beam body is installed with the lock assembly 100, and the operating member 30 of the lock assembly 100 is located at an end of the first beam body in the vehicle width direction.

In the above technical solution, arranging the plurality of lock bodies 10 on the first beam bodies extending along the vehicle width direction enables synchronized unlocking of the plurality of lock bodies 10, improving the consistency of unlocking actions during battery removal and enhancing battery swapping efficiency.

In some embodiments, the electric apparatus 1000 is a vehicle, the battery tray 300 includes at least two second beam bodies, the second beam bodies extend along the vehicle length direction and are arranged oppositely along the vehicle width direction, each second beam body has the lock assembly 100 installed therein, and the operating member 30 of the lock assembly 100 is located at an end of the second beam body in the vehicle width direction.

In the above technical solution, arranging the plurality of lock bodies 10 on the second beam bodies extending along the vehicle length direction enables synchronized unlocking of the plurality of lock bodies 10, improving the consistency of unlocking actions during battery removal and enhancing battery swapping efficiency.

According to a fourth aspect, this application provides a battery 2000, where the battery 2000 includes the lock assembly 100 described in the embodiments of the first aspect, and the lock assembly 100 is disposed on at least one surface of the battery 2000.

The outer surface of the battery 2000 may include an upper surface, a lower surface, and four side surfaces. The lock assembly 100 may be disposed on the upper surface to facilitate locking and assembling the battery 2000 with an upper structure, or the lock assembly 100 may be disposed on the upper surface to facilitate locking and assembling the battery 2000 with a lower structure, or the lock assembly 100 may be disposed on any side surface to facilitate locking and assembling the battery 2000 with a side structure. When the lock assembly 100 is disposed on the battery 2000, the lock pin 200 cooperating with the lock body 10 may be correspondingly installed on the battery tray 300 or on the electric apparatus 1000, such as on the vehicle body.

In the above technical solution, the plurality of lock bodies 10 can achieve synchronized unlocking, improving the consistency of unlocking actions during battery swapping, enhancing battery swapping efficiency, reducing the probability of damage to the lock body 10 due to uneven force distribution among the plurality of lock bodies 10, improving the structural reliability of the lock assembly 100, and increasing the success rate of battery swapping.

According to a fifth aspect, this application provides an electric apparatus 1000, where the electric apparatus 1000 includes a main body, a battery 2000, and the lock assembly 100 described in the embodiments of the first aspect, where the lock assembly 100 is configured to detachably lock the battery 2000 to the main body.

The lock assembly 100 may be directly disposed on the main body of the electric apparatus 1000, and the battery 2000 is directly installed on the main body of the electric apparatus 1000. For example, if the electric apparatus 1000 is a vehicle, the main body is the vehicle body, and the lock assembly 100 is disposed on the vehicle body, such as on a crossbeam or longitudinal beam of the vehicle body. The battery 2000 is installed on the vehicle body by locking with the lock assembly 100.

In the above technical solution, the plurality of lock bodies can achieve synchronized unlocking, improving the consistency of unlocking actions during battery swapping, enhancing battery swapping efficiency, reducing the probability of damage to the lock body due to uneven force distribution among the plurality of lock bodies, improving the structural reliability of the lock assembly, and increasing the success rate of battery swapping.

Finally, it should be noted that the above embodiments are only used to illustrate the technical solutions of this application and not to limit them. Although this application has been described in detail with reference to the foregoing embodiments, those skilled in the art should understand that modifications can be made to the technical solutions described in the foregoing embodiments, or equivalent substitutions can be made to some or all of the technical features. Such modifications or substitutions do not cause the essence of the corresponding technical solutions to depart from the scope of the technical solutions of the embodiments of this application and should be encompassed within the scope of the claims and description of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A lock assembly **characterized by** comprising:
a plurality of lock bodies the lock body comprising a locking component and a driving member wherein the locking component is configured to be able to be driven by the driving member to transition from a locked state to an unlocked state; and
a connecting structure wherein the connecting structure is connected to driving members of the plurality of lock bodies to link the driving members of the plurality of lock bodies enabling locking components of the plurality of lock bodies to be simultaneously driven by the corresponding driving members to transition from the locked state to the unlocked state.

2. The lock assembly according to claim 1, **characterized in that** the lock assembly further comprises an operating member
wherein the operating member is connected to at least one of the driving members the operating member being configured to control the at least one driving member to drive a corresponding locking component to transition from the locked state to the unlocked state; or
wherein the operating member is connected to the connecting structure the operating member being configured to drive the driving members of the plurality of lock bodies through the connecting structure enabling the locking components of the plurality of lock bodies to be driven by the corresponding driving members to transition from the locked state to the unlocked state.

3. The lock assembly according to claim 1 or 2, **characterized in that** the connecting structure comprises a connecting rod and the driving members of the plurality of lock bodies are all connected to the connecting rod

4. The lock assembly according to claim 3, **characterized in that** the connecting rod extends along a first direction, and the plurality of lock bodies are arranged at intervals along the first direction.

5. The lock assembly according to any one of claims 1 to 4, **characterized in that** the lock body comprises a fixed base the driving member is configured to be rotatable relative to the fixed base and the locking component is configured to be able to transition from the locked state to the unlocked state with rotation of the driving member

6. The lock assembly according to claim 5, **characterized in that** the driving member comprises a rotation center portion and a protruding portion protruding circumferentially from the rotation center portion the fixed base is provided with a first rotation shaft the first rotation shaft passes through the rotation center portion and the connecting structure is rotatably connected to the protruding portion

7. The lock assembly according to claim 6, **characterized in that** a plurality of protruding portions are provided, the connecting structure is rotatably connected to one of the protruding portions and another of the protruding portions is configured to be connected to the operating member

8. The lock assembly according to any one of claims 5 to 7, **characterized in that** the locking component comprises a locking member the locking member has a locking passage for receiving a lock pin and the locking member is configured to be rotatable relative to the fixed base enabling an opening of the locking passage to face different directions when the locking component is in the locked state and when the locking component is in the unlocked state.

9. The lock assembly according to claim 8, **characterized in that** the fixed base comprises a lock pin entrance the lock assembly is configured such that when the locking component is in the unlocked state, the opening of the locking passage faces the lock pin entrance and the lock assembly is further configured such that when the locking component is in the locked state, the opening of the locking passage does not face the lock pin entrance

10. The lock assembly according to claim 9, **characterized in that** the fixed base is provided with a second rotation shaft and the second rotation shaft passes through the locking member

11. The lock assembly according to any one of claims 8 to 10, **characterized in that** the locking component further comprises a mating locking member the locking member is provided with a first locking portion the mating locking member is provided with a second locking portion and the mating locking member is configured to engage with the first locking portion through the second locking portion when the locking member is in the locked state.

12. The lock assembly according to claim 11, **characterized in that** the driving member is connected to the mating locking member and the mating locking member is configured to be able to move under driving of the driving member to disengage the second locking portion from the first locking portion

13. The lock assembly according to claim 12, **characterized in that** the driving member comprises the rotation center portion and the protruding portion protruding circumferentially from the rotation center portion, wherein the protruding portion is provided in plurality and the mating locking member is connected to at least one of the plurality of protruding portions

14. The lock assembly according to claim 12 or 13, **characterized in that** the mating locking member is configured to be rotatable relative to the fixed base, and the mating locking member is configured to be able to rotate under driving of the driving member to disengage the second locking portion from the first locking portion

15. The lock assembly according to claim 1, **characterized in that** the lock body comprises a fixed base the fixed base comprises a lock pin entrance the locking component comprises a locking member and a mating locking member the locking member has a locking passage for receiving a lock pin
wherein the locking component is configured such that when in the locked state, an opening of the locking passage does not face the lock pin entrance and the mating locking member abuts and engages with the locking member and the locking component is further configured such that when in the unlocked state, the mating locking member disengages from the locking member enabling the opening of the locking passage to be able to face the lock pin entrance

16. The lock assembly according to claim 15, **characterized in that** the driving member the locking member and the mating locking member are each configured to be rotatable relative to the fixed base the fixed base is provided with a first rotation shaft a second rotation shaft and a third rotation shaft the first rotation shaft passes through the driving member the second rotation shaft passes through the locking member the third rotation shaft passes through the mating locking member and the first rotation shaft the second rotation shaft and the third rotation shaft are not arranged in a same plane.

17. A battery tray **characterized in that** the battery tray comprises the lock assembly according to any one of claims 1 to 16.

18. The battery tray according to claim 17, **characterized in that** the battery tray comprises a plurality of beam bodies the beam body is provided with a hollow cavity, and the lock assembly is installed in the hollow cavity.

19. The battery tray according to claim 18, **characterized in that** an outer wall of the beam body is provided with an unlocking hole at a position corresponding to an operating member of the lock assembly

20. An electric apparatus **characterized in that** the electric apparatus comprises a battery and the battery tray according to any one of claims 17 to 19, wherein the battery is indirectly connected to the electric apparatus via being connected to the battery tray

21. The electric apparatus according to claim 20, **characterized in that** the electric apparatus is a vehicle, the battery tray comprises at least two first beam bodies extending along a vehicle width direction and arranged oppositely along a vehicle length direction, each first beam body is installed with the lock assembly, and the operating member of the lock assembly is located at an end of the first beam body in the vehicle width direction.

22. The electric apparatus according to claim 20 or 21, **characterized in that** the electric apparatus is a vehicle, the battery tray comprises at least two second beam bodies extending along the vehicle length direction and arranged oppositely along the vehicle width direction, each second beam body is installed with the lock assembly and the operating member of the lock assembly is located at an end of the second beam body in the vehicle width direction.

23. A battery **characterized in that** the battery comprises the lock assembly according to any one of claims 1 to 16, wherein the lock assembly is disposed on at least one surface of the battery

24. An electric apparatus **characterized in that** the electric apparatus comprises a main body, a battery, and the lock assembly according to any one of claims 1 to 16, wherein the lock assembly is configured to detachably lock the battery to the main body.
